# EUROPEAN PATENT SPECIFICATION

(11) **EP 2 519 990 B1**
(45) Date of publication and mention of the grant of the patent: **02.01.2019**
(21) Application number: 10841443.4
(22) Date of filing: 16.11.2010
(51) Int. Cl.: H01M 8/0282, H01M 8/0286, H01M 8/1246, C04B 41/00, C04B 41/50, C04B 35/16, C04B 35/195, C04B 41/87, C03C 3/062, C03C 3/085, C03C 8/02, C03C 10/00, C04B 111/00

(54) **THIN, FINE GRAINED AND FULLY DENSE GLASS-CERAMIC SEAL FOR SOFC STACK**
DÜNNE, FEINKÖRNIGE UND VOLLSTÄNDIG DICHTE GLASKERAMIKDICHTUNG FÜR SOFC-STAPEL
JOINT D'ÉTANCHÉITÉ VERRE-CÉRAMIQUE MINCE, À GRAINS FINS ET TOTALEMENT DENSE POUR UN EMPILEMENT DE PILES À COMBUSTIBLE À OXYDES SOLIDES

(30) Priority: 31.12.2009 US 335155 P
(43) Date of publication of application: 07.11.2012
(73) Proprietor: Saint-Gobain Ceramics & Plastics Inc., Worcester, Massachusetts 01615-0138 (US)
(72) Inventor: PARIHAR, Shailendra, S., 95051 Santa Clara, CA (US); QUEREL, Gilles, 1200 Woluwe-Saint-Lambert (BE); GICH, Marti, F-93300 Aubervilliers (FR)
(74) Representative: Zimmermann & Partner Patentanwälte mbB
(86) International application number: PCT/US2010/056859
(87) International publication number: WO 2011/081736

(56) References cited:
- WO-A2-2008/127565
- DD-A5- 295 825
- DE-A1-102005 002 435
- KR-A- 19990 049 582
- US-A- 5 250 360
- US-A1- 2008 131 739
- US-B1- 6 430 966
- US-B1- 6 430 966
- US-B1- 6 430 966
- SEYED M. ALLAMEH ET AL: "Synthesis of Celsian (BaAl2Si2O8) from Solid Ba-Al-Al2O3-SiO2 Precursors: I, XRD and SEM/EDX Analyses of Phase Evolution", JOURNAL OF THE AMERICAN CERAMIC SOCIETY, vol. 80, no. 12, 21 December 1997 (1997-12-21), pages 3109-3126, XP055197699, ISSN: 0002-7820, DOI: 10.1111/j.1151-2916.1997.tb03239.x

## Description

### BACKGROUND OF THE INVENTION

A fuel cell is a device that generates electricity by a chemical reaction. Typically, in a fuel cell, an oxygen gas, such as O₂, is reduced to oxygen ions (O²⁻) at the cathode, and a fuel gas, such as H₂, is oxidized with the oxygen ions to form water at the anode. Among various types of fuel cells, solid oxide fuel cells (SOFCs) use hard ceramic compounds of metal oxides (e.g., calcium or zirconium oxides) to form components of the fuel cell, such as, for example, the anode, cathode, electrolyte, and interconnect. Fuel cells are generally designed as stacks, whereby subassemblies, each including a cathode, an anode and a solid electrolyte between the cathode and the anode, are assembled in series by locating an electrical interconnect between the cathode of one subassembly and the anode of another.

Generally, the fuel gas is separated from the oxygen gas stream with leak-tight seals. Generally, in SOFCs, leak-tight seals separating the fuel gas from the oxygen gas are exposed to elevated temperatures (e.g., 600-800 °C) during normal operation. Glasses or glass-ceramic materials typically have been used for such leak-tight seals. Among the requirements for such seals are hermeticity, full density, and mechanical strength. These requirements are typically fulfilled by employing relatively thick (about 0.5 mm to about 2 mm) seals. In certain SOFC stack designs, however, it is preferable to keep the seal thickness as low as possible to reduce seal-induced stresses on the stack.

Reliable sealing technology is needed to achieve high power densities in planar solid oxide fuel cell (SOFC) stacks. In planar SOFCs, the sealant is in contact with all other components of the cell and thus is subject to stringent requirements such as gas tightness, matching of thermal expansion coefficients (CTEs), and thermal stability both in wet reducing atmospheres and in oxidizing atmospheres at high temperature (800-1000 °C). Glass-ceramics are among the most promising sealants, because by controlling the crystallization of glasses (*i*.*e*., the nature, shape, and volume fraction of crystals), the CTE of the material can be tuned to match the CTEs of the cell components, such as, for example, yttria-stabilized zirconia (YSZ), lanthanum strontium titanate (LST), lanthanum strontium manganite (LSM), and nickel oxide-YSZ composite. Moreover, glass-ceramics exhibit mechanical robustness, long term stability at cell operating temperatures, electrically insulating behavior, good wetting of cell components, and ready application to the surfaces to be sealed as glass-frit powder dispersed in a paste, or as a tape-cast sheet that subsequently is subjected to thermal treatments of sintering and crystallization. However, this sealing process adds extra constraints to the material, since the parent glass has to be fluid enough to wet the cell components and efficiently sinter leaving no porosity, but the material needs to be viscous enough to not flow out. Thus, the ideal glass should crystallize slightly above the temperature at which the viscosity is optimal for sintering (about 10⁷ Pa·s to 10⁸ Pa·s). One typical approach to controlling the rheology of the glass has been by B₂O₃ additions, but such additions can be detrimental to long term stability of the seal at cell operation temperatures. SEYED M. ALLAMEH ET AL: Synthesis of Celsian (BaAl2Si2O8) from Solid Ba-AL-AL2O3-SiO2 Precursors: I, XRD and SEM/EDX Analyses of Phase Evolution", Journal of the American Ceramic Society, vo. 80, no. 12, 21 December 1997, pages 3109-3126 refers to the synthesis of celsian from solid Ba-Al-Al₂O₃-SiO₂ Precursors. US 6 430 966 B1 refers to a glass-ceramic material and method of making it useful for joining at least two solid ceramic parts. The seal is a blend of MAO-MBOy-SiO₂ that substantially matches a coefficient of thermal expansion of the solid electrolyte. A series of glass ceramics in the MAO-MBOy-SiO₂ system can be used to join or seal both tubular and planar ceramic solid oxide fuel cells, oxygen electrolyzers, and membrane reactors for the production of syngas, commodity chemicals and other products.

In view of the foregoing, there is a need to overcome or minimize the above-mentioned problems.

### SUMMARY OF THE INVENTION

The invention generally is directed to a glass-ceramic seal for a solid oxide fuel cell stack.

In one embodiment, the invention is directed to a solid oxide ceramic as defined in claim 1 that comprises a substrate defining a surface, the substrate including at least one material selected from the group consisting of yttria-stabilized zirconia (YSZ), lanthanum strontium titanate (LST), lanthanum strontium manganite (LSM), and nickel oxide-YSZ composite. The solid oxide ceramic further includes a seal coating at least a portion of the surface, the seal including a sanbornite (BaO•2SiO₂) crystal phase, a hexacelsian (BaO•Al₂O₃•2SiO₂) crystal phase, and a residual glass phase, wherein the seal has a coefficient of thermal expansion equal to or less than that of the substrate at said surface. The glass composition can have a difference between a glass crystallization temperature and a glass transition temperature in a range of between 200 °C and 400 °C at a heating rate of 20 °C/min. The molar ratio of SiO₂: BaO can be between 1:1 and 4:1. The amount of Al₂O₃ present typically is present in a range of between 3.5 mol% and 12 mol%. In some embodiments, the molar ratio of SiO₂: BaO is 2:1. The seal has a thickness in a range of between 1 µm and 500 µm at room temperature. In some embodiments, the seal can have a thickness in a range of between 10 µm and 250 µm at room temperature. In other embodiments, the seal can have a thickness in a range of between 20 µm and 100 µm at room temperature. The glass composition includes crystals having an average particle size (d₅₀) in a range of between 200 nm and 50 µm. In certain embodiments, the average particle size (d₅₀) of the crystals can be in a range of between 200 nm and 5 µm. The average particle size (d₅₀) of the crystals is in a range of between 500 nm and 2 µm.

In another embodiment, the invention is directed to a method of sealing at least a part of a surface of a solid oxide ceramic as defined in claim 5. The method includes forming a glass composition that upon heating will form a Sanbornite (BaO•2SiO₂) crystal phase, a Hexacelsian (BaO•Al₂O₃•2SiO₂) crystal phase, and a residual glass phase, milling the glass composition to produce a glass powder having an average particle size (d₅₀) in a range of between 500 nm and 100 µm, and mixing the glass powder with a binder and a liquid to form a slurry. The method can further include removing the binder before sintering the coated solid oxide ceramic part by heating the coated solid oxide ceramic part to a temperature in a range of between about 300 °C and about 500 °C for a time period in a range of between about one hour and about 24 hours. The average particle size (d₅₀) of the glass powder can be in a range of between about 500 nm and about 50 µm. In some embodiments, the average particle size (d₅₀) of the glass powder is in a range of between about 500 nm and about 5 µm. In other embodiments, the average particle size (d₅₀) of the glass powder is in a range of between about 500 nm and about 2 µm. The method further includes coating at least a part of a surface of the solid oxide ceramic with the slurry, the surface defined by a substrate, the substrate including at least one material selected from the group consisting of yttria-stabilized zirconia (YSZ), lanthanum strontium titanate (LST), lanthanum strontium manganite (LSM), and nickel oxide-YSZ composite, sintering the coating of the coated solid oxide ceramic part, and heating the coating of the solid oxide ceramic part to form crystals having an average particle size (d₅₀) in a range of between 200 nm and 50 µm, thereby forming the sealed solid oxide ceramic part, wherein the seal has a coefficient of thermal expansion equal to or less than that of the substrate at said surface. Sintering and heating the coating of the solid oxide ceramic part to form crystals can be conducted at a pressure of less than 3 MPa. The coating of the solid oxide ceramic part after heating has a thickness in a range of between about 1 µm and about 500 µm at room temperature. In some embodiments, the coating of the solid oxide ceramic part after heating can have a thickness in a range of between about 10 µm and about 250 µm at room temperature. In other embodiments, the coating of the solid oxide ceramic part after heating has a thickness in a range of between about 20 µm and about 100 µm at room temperature. The coated solid oxide ceramic part can be sintered at a temperature in a range of between about 750 °C and about 950 °C for a time period in a range of between about one-half hour and about 8 hours. In some embodiments, the coated solid oxide ceramic part can be sintered at a temperature in a range of between about 800 °C and about 900 °C for a time period in a range of between about an hour and about 3 hours. The coated solid oxide ceramic part can be heated to form crystals at a temperature in a range of between about 850 °C and about 1100 °C for a time period in a range of between about one-half hour and about 8 hours. In some embodiments, the coated solid oxide ceramic part can be heated to form crystals at a temperature in a range of between about 925 °C and about 1025 °C for a time period in a range of between about two hours and about 4 hours. In yet another embodiment, the invention is directed to a solid oxide ceramic made by the above method.

This invention has many advantages, including enabling a relatively thin, fully dense, hermetic seal for SOFC stacks, and including that there is no boron present in the seal material, thereby reducing the volatility and bubbling of the seal material over the life of the fuel cell.

### BRIEF DESCRIPTION OF THE DRAWINGS

FIG. 1 is an illustration of a ternary composition diagram of the BaO, Al₂O₃, SiO₂ (BAS) system showing the region of glass-ceramic compositions of the invention.
FIG. 2 is graph of DSC curves of Samples A-E recorded at 20 °C/min.
FIG. 3 is a graph of temperature as a function of Al₂O₃ content for Samples A-E, showing the glass transition, onset, and peak crystallization temperatures (left axis), and undercooled liquid region temperature (right axis).
FIG. 4 is a graph of dilatometric curves as a function of temperature for Samples A-E, after isothermal threatments of 2 hours at 1000 °C (5 °C/min heating and cooling ramps) and an ideal dilatometric target curve with a CTE of 11.7·10⁻⁶ °C⁻¹.
FIG. 5 is a graph of CTE as a function of Al₂O₃ content for Samples A-E, calculated between 30 °C and 850 °C from the dilatometric curves of glass ceramic Samples A-E annealed for 2 hours at the indicated temperatures. For Samples C-E prepared at 800 °C, the CTE has been calculated between 25 °C and 300 °C.
FIG. 6 is a photograph of an SEM image of a stack-seal interface the seal thickness of about 50 microns, the seal having the glass-ceramic composition of Sample C.
FIG. 7 is a photograph of an SEM image of a seal material microstructure, showing an average particle size (d₅₀) of the crystals of about 2 microns, the seal having the glass-ceramic composition of Sample B.

### DETAILED DESCRIPTION OF THE INVENTION

The foregoing will be apparent from the following more particular description of example embodiments of the invention, as illustrated in the accompanying drawings. The drawings are not necessarily to scale, emphasis instead being placed upon illustrating embodiments of the present invention.

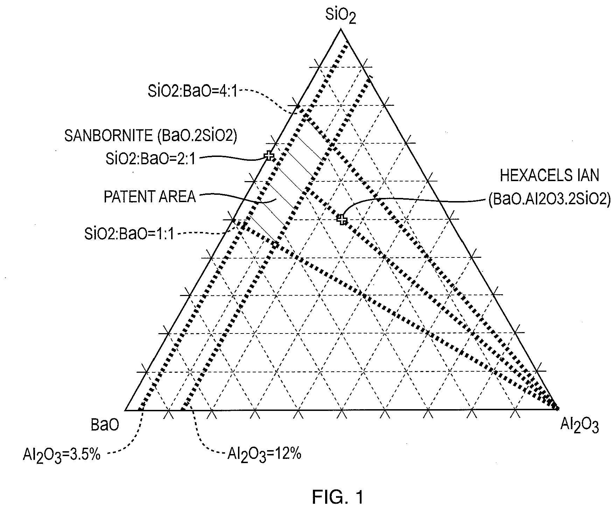

Glass-ceramic materials based on mixtures of BaO, Al₂O₃, and SiO₂ (BAS) are promising materials for SOFC sealing applications due to their high CTE and thermal stability at cell operation temperatures, particularly those obtained from glass compositions, shown in FIG. 1, lying on the Alkemade line joining the Sanbornite (BaO•2SiO₂) and Hexacelsian (BaO•Al₂O₃•2SiO₂) crystal phases, hereinafter labeled as BS₂ and BAS₂, respectively. Given that the CTE of BS₂ and the high-temperature form of BAS₂ are 13.5·10⁻⁶ °C⁻¹ and 8.0·10⁻⁶ °C⁻¹, respectively, a glass-ceramic mixture of the two crystal phases (and residual glass phase) can be obtained that approximately matches the average CTE of the cell (about 11.7·10⁻⁶ °C⁻¹).

In one embodiment, the invention is directed to a solid oxide ceramic that comprises a substrate defining a surface, the substrate including at least one material selected from the group consisting of yttria-stabilized zirconia (YSZ), lanthanum strontium titanate (LST), lanthanum strontium manganite (LSM), and nickel oxide-YSZ composite. The CTEs of these materials are listed in Table 1.

**Table 1. CTEs of solid oxide fuel cell materials**

| Material | CTE ·10⁻⁶ °C⁻¹ |
|---|---|
| Anode (NiO YSZ composite) | 12.5 |
| Cathode (LSM) | 11 |
| Electrolyte (YSZ) | 10.5 |
| Interconnect LST | 10.8 |

The solid oxide ceramic further includes a seal coating at least a portion of the surface, the seal including a Sanbornite (BaO•2SiO₂) crystal phase (BS₂), a Hexacelsian (BaO•Al₂O₃•2SiO₂) crystal phase (BAS₂), and a residual glass phase, wherein the seal has a coefficient of thermal expansion equal to or less than that of the substrate at said surface. BAS₂ is the main ternary compound in the BAS system, but it presents monoclinic, hexagonal, and orthorhombic polymorphs (hereinafter labeled as m-BAS₂, h-BAS₂, and o-BAS₂, respectively). The low thermal expansion m-BAS₂ (CTE=2.3·10⁻⁶ °C⁻¹) is stable up to 1590 °C, and above this temperature it transforms into h-BAS₂ (CTE=8.0·10⁻⁶ °C⁻¹), which is stable up to its melting point (1760 °C). However, due to the slow transformation of m-BAS₂ into h-BAS₂, h-BAS₂ has a strong tendency to persist metastably over the whole temperature range. In addition, on heating from room temperature to about 300 °C, a reversible transformation of h-BAS₂ to o-BAS₂ occurs, that is accompanied by a volume expansion of about 3%, which is a source of stress that can be problematic for the sealing application. Therefore, in order to decrease the amount of h-BAS₂ present in the glass-ceramic sealing material, a mixture can be obtained with the BS₂ crystal phase, and a residual glass phase. According to the BAS equilibrium phase diagram shown in FIG. 1, the crystallization of the glass-ceramic should yield glass-ceramics showing crystallized fractions composed of between 42 vol% and 80 vol% BS₂ and between 20 vol% and 58 vol% BAS₂, with CTEs between 12.4·10⁻⁶ °C⁻¹ and 10.3·10⁻⁶ °C⁻¹, respectively. The molar ratio of SiO₂: BaO typically is between 1:1 and 4:1. The amount of Al₂O₃ present ranges from between 3.5 mol% and 12 mol%. In a preferred embodiment, the molar ratio of SiO₂: BaO is 2:1. The region of the ternary diagram representing glass-ceramic compositions of the invention is shown in FIG. 1.

Glass compositions typically need to show good sinterability to be suitable for SOFC seal applications. For glass-ceramic materials, there is usually a competition between sintering and crystallization processes during the heat up of the glass compact above the glass transition temperature (T_{g}). The higher the difference between the sintering and crystallization onset temperatures for a given glass powder at a given heating rate, the easier it is to sinter it before crystallization. Differential scanning calorimetry (DSC) is a widely used technique to identify the occurrence of these thermal events during heating of glass powder samples. The main thermal events identified in a DSC run on the glass powder samples are T_{g}, the glass crystallization onset temperature (Tₓ), and the liquidus temperature (Tₗ). Sintering of the glass powder starts at a temperature slightly above the glass transition temperature (T_{g}), and slows down considerably at Tₓ, the crystallization onset temperature. A criterion expressed as Δ(Tₓ-T_{g}), therefore, is a good indicator for the sinterability of a glass powder compact of a given composition at a given heating rate. The glass composition of the invention can have a difference between a glass crystallization temperature (Tₓ) and a glass transition temperature (Tg) in a range of between about 200 °C and about 400 °C, preferably greater than about 225 °C, and more preferably greater than about 245 °C, at a heating rate of about 20 °C/min.

Glasses can be prepared by melting powder mixtures containing the appropriate amounts, described above in mol%, of prefired alumina (Al₂O₃), barium carbonate (BaCO₃), and silica (SiO₂). The melting can be conducted in joule-heated platinum crucibles at a temperature in a range of between about 1500 °C and about 1600 °C. The melts can be allowed to refine for a time period between about one hour and about three hours before being water quenched, resulting in glass frits. The glass frits can be first broken into smaller sized particles by employing an alumina pulverizer. The resulting glass powder can be planetary-ball milled and screened to produce a glass powder having an average particle size (d₅₀) in a range of between 500 nm and 100 µm, preferably about 1 µm. The particle size distribution (PSD) and specific surface area (SSA) of the resulting powder can be determined using, for example, a Horiba (Horiba Instruments, Inc., Irvine, CA) LA920 laser scattering PSD analyzer and a Micromeritics (Micromeritics Instrument Corp., Norcross, GA) Tri-Star ASAP 2000 SSA analyzer, respectively.

Glass powder can be mixed with a polymeric binder and an organic solvent to produce a slurry of glass particles. This slurry can then be deposited as a thin layer on a solid oxide ceramic part, by various techniques, such as, for example, air spraying, plasma spraying, and screen printing. A preferred technique is air spraying. Firing of the assembly results in sintering and crystallization of the glass layer, which confers a thin, fully dense, highly crystallized seal layer on the solid oxide ceramic part. The firing cycle of the seal is carefully controlled and is usually done in two stages, but can also be a one stage process. The two stages are, first, sintering the coated solid oxide ceramic part, and, second, heating the coating of the solid oxide ceramic part to form crystals having an average particle size (d₅₀) in a range of between 200 nm and a50 µm, thereby forming the sealed solid oxide ceramic part, wherein the seal has a coefficient of thermal expansion equal to or less than that of the solid oxide ceramic part. Sintering and heating the coating of the solid oxide ceramic part to form crystals can be conducted at a pressure of less than 3 MPa. Indeed, an advantage of the seal of the invention is that by use of the glass-ceramic compositions described above, a fully dense seal can be obtained without applying pressure, which is particularly useful, for example, for sealing a ceramic layer adjacent to the stack. The coating of the solid oxide ceramic part after heating has a thickness in a range of between 1 µm and 500 µm at room temperature. In some embodiments, the coating of the solid oxide ceramic part after heating can have a thickness in a range of between about 10 µm and about 250 µm at room temperature. In other embodiments, the coating of the solid oxide ceramic part after heating can have a thickness in a range of between about 20 µm and about 100 µm at room temperature. Furthermore, the seal thickness can be controlled to suit the specific purpose by building up the thickness of the seal using coat-dry-coat-dry-firing or coat-dry-firing-coat-dry-firing approaches repetitively. A glass slurry coat can be dried and successive coats can be deposited on the dried glass powder repetitively to achieve a desired thickness. For each successive coat, it is preferable to dry the previous coat before applying another coat, and then the multi-coat seal can be fired together in a single heat treatment. Alternatively, additional layers of the seal material can be deposited on top of an already fired seal layer, and the process can be repeated multiple times to achieve a desired seal thickness.

The method can further include removing the binder before sintering the coated solid oxide ceramic part by heating the coated solid oxide ceramic part to a temperature in a range of between about 300 °C and about 500 °C for a time period in a range of between about one hour and about 24 hours.

The method then includes sintering the coating of the coated solid oxide ceramic part at a temperature in a range of between about 750 °C and about 950 °C for a time period in a range of between about one-half hour and about 8 hours, preferably at a temperature in a range of between about 800 °C and about 900 °C for a time period in a range of between about an hour and about 3 hours.

The coating of the solid oxide ceramic part can be heated to form crystals at a temperature in a range of between about 850 °C and about 1100 °C for a time period in a range of between about one-half hour and about 8 hours, preferably at a temperature in a range of between about 925 °C and about 1025 °C for a time period in a range of between about two hours and about 4 hours. The average particle size (d₅₀) of the crystals is in a range of between 200 nm and 50 µm, preferably in a range of between about 200 nm and about 5 µm, more preferably in a range of between about 500 nm and about 2 µm. The smaller the size of the crystals, the better the mechanical properties of the resulting seal. The crystal size is determined by the starting glass composition, which determines the value of Δ(Tₓ-T_{g}), and by the size of the particles of starting glass powder. The compositions of the invention shown in FIG. 1 have a value of Δ(Tₓ-T_{g}) greater than about 170 °C, preferably greater than about 200 °C, more preferably greater than about 225 °C, and most preferably greater than about 245 °C at a heating rate of about 20 °C/min. As described above, the average particle size (d₅₀) of starting glass powder is in a range of between 500 nm and 100 µm, preferably about 1 µm.

### Exemplification

Glasses were prepared by melting powder mixtures containing the amounts of the components shown in Table 2 below. Melting was conducted on joule-heated platinum crucibles at about 1510 °C (Sample A), about 1550 °C (Samples B and C), and about 1600 °C (Samples D and E), and allowed to refine for a time period in a range of between about 1 hour and about 3 hours before being water quenched. The chemical compositions of the resulting glass frits shown in Table 2 were obtained by inductively coupled plasma mass spectrometry (ICP-MS). The target SiO₂/BaO ratio for Samples A-E was 2.0, and, as shown in Table 2, the largest deviation from the targeted Al₂O₃ content was only 0.4 mol%. The chemical analysis also showed that the glasses contained between 0.13 mol% and 0.15 mol% impurities of SrO incorporated with the barium carbonate raw material.

**Table 2. Glass Compositions (GC) of BAS Samples**

| Sample | Composition (mol %) | BaO | Al₂O₃ | SiO₂ | vol. % h-BAS₂ in GC | vol. % BS₂ in GC | GC CTE (10⁻⁶ °C⁻¹) |
|---|---|---|---|---|---|---|---|
| A | Target | 32.16 | 3.53 | 64.31 | 20.5 | 79.5 | 12.37 |
| | Measured | 32.34 | 3.62 | 63.89 | | | |
| B | Target | 31.55 | 5.35 | 63.10 | 28.7 | 71.3 | 11.9 |
| | Measured | 32.69 | 5.23 | 61.94 | | | |
| C | Target | 30.77 | 7.70 | 61.53 | 39.7 | 60.3 | 11.31 |
| | Measured | 31.1 | 8.09 | 60.8 | | | |
| D | Target | 30.13 | 9.61 | 60.26 | 48.2 | 51.8 | 10.85 |
| | Measured | 30.41 | 9.48 | 59.98 | | | |
| E | Target | 29.47 | 11.58 | 58.95 | 58.3 | 41.7 | 10.29 |
| | Measured | 29.9 | 11.97 | 57.99 | | | |

The glass frits were milled according to the powder preparation procedure described above. Differential scanning calorimetry (DSC) measurements were performed from room temperature to 1350 °C using a Netzsch (Netzsch GmbH, Selb, Germany) DSC 404C apparatus at a heating rate of about 20 °C /min in Pt-Rh crucibles, each sample measurement being preceded by baseline acquisition and sapphire calibration runs. The sintering behavior of the glass frits was studied with a Setaram (SETARAM, Inc., Newark, CA) SETSYS thermo-mechanical analyzer (TMA) on heating from room temperature to 1100 °C at 5 °C/min, under an argon atmosphere and a 5 g applied load. A baseline correction was applied to the measurements. The glass powder samples were cold pressed using a 7x1x0.8 cm steel die under a 1400 kg load to form bars subsequently submitted to different thermal treatments consisting of 2 hour isotherms at 800, 850, 900, 950, 1000, 1050, and 1100 °C (5 °C/min heating and cooling rates).

The thermal expansion of the glass-ceramics resulting from these thermal treatments was measured from room temperature to 1000 °C at 5 °C/min in specimens of about 20 mm with a Linseis (Linseis, Inc., Princeton Junction, NJ) 75HD Dilatometer equipped with a silica sample holder and silica pushrods, and calibrated with an alumina secondary standard provided by Linseis.

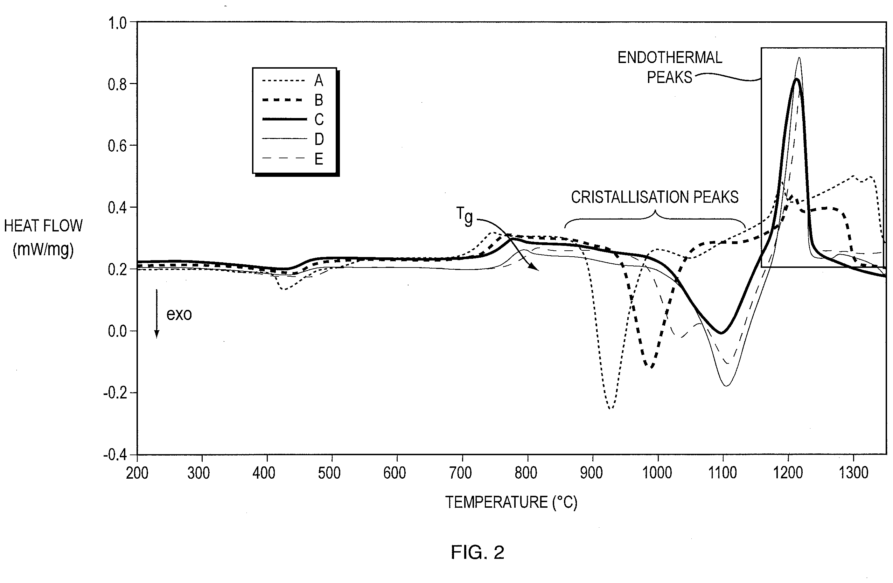

Thermal analysis by DSC enables determining the temperature of the glass transition (T_{g}), the onset and the peak of the glass crystallization reaction (Tₓ and Tₚ, respectively), and the melting of the crystalline phases or any endothermic process occurring in the system (peak temperature labeled as Tₑₚ in Table 3 below). FIG. 2 shows the DSC traces for Samples A-E glasses recorded at 20 °C/min. The temperature range where the glass transition, the glass crystallization and endothermic processes occur has been indicated in FIG. 2. The temperature values of those points for Samples A-E are listed in Table 3 below, together with the undercooled liquid region, Δ(Tₓ-T_{g}).

**Table 3. Temperatures of the glass transition, crystallization, undercooled liquid region, and endothermal processes for Samples A-E glasses.**

| Sample | Transition | Crystallizations | | | | Endotherms | | |
|---|---|---|---|---|---|---|---|---|
| | T_{g} (°C) | Tₓ (°C) | Tₚ (°C) | Δ(Tₓ-T_{g}) (°C) | Tₚ₂ (°C) | Tₑₚ₁ (°C) | Tₑₚ₂ (°C) | Tₑₚ₃ (°C) |
| A | 726 | 894 | 929 | 168 | 1052 | 1189 | 1299 | 1325 |
| B | 743 | 944 | 989 | 201 | | 1203 | 1271 ? | |
| C | 762 | 1011 | 1098 | 249 | | 1213 | | |
| D | 775 | 1007 | 1107 | 232 | | 1217 | | |
| E | 796 | 982 | 1034 | 186 | 1100 | 1219 | | |

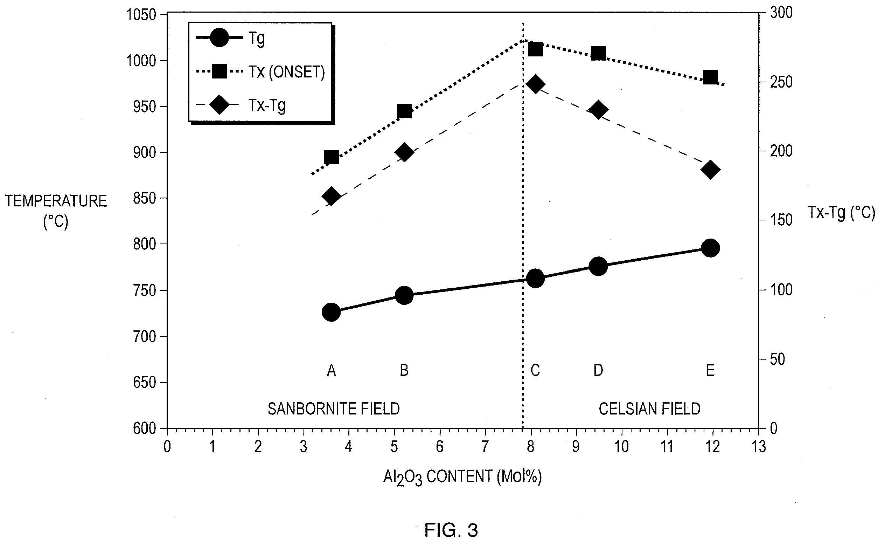

As shown in Table 3, glasses richer in alumina have a higher T_{g}. By contrast, as shown in FIG. 3, there is no clear trend relating the devitrification temperatures with increasing alumina content, but two types of crystallization behaviors with Samples A-B on the one hand, and Samples C-E on the other (See FIGS. 2-3). This dissimilar devitrification behavior is related to the fact that Sample C lies close to the boundary curve leading to the Sanbornite-Celsian-Tridymite eutectic separating the Sanbornite and Celsian fields where Samples A-B and Samples D-E are respectively located.

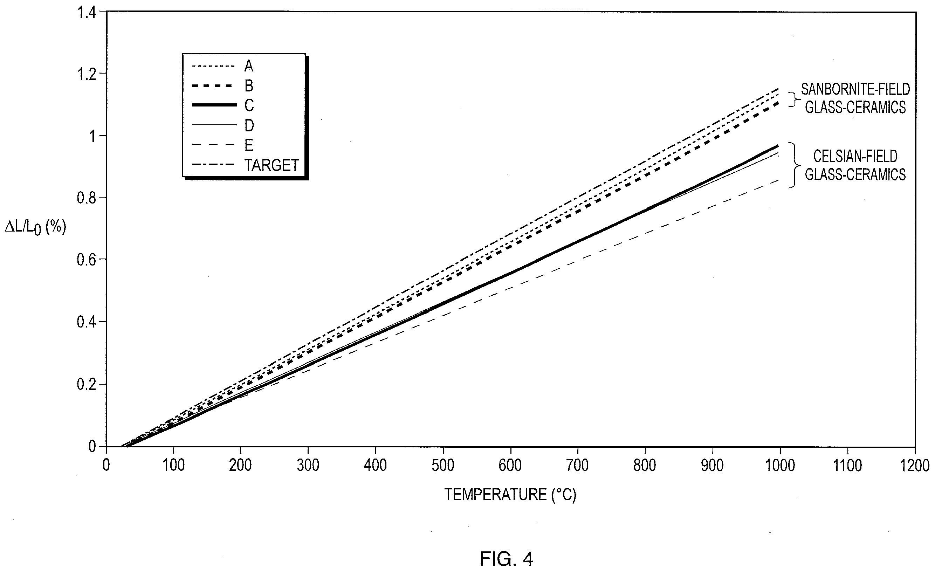

Thermal expansion measurements were conducted on the glass-ceramics obtained from the Samples A-E glasses after 2 hour isotherms at 800, 850, 900, 950, 1000, 1050, and 1100 °C (5 °C/min heating and cooling rates). The results of glass-ceramics prepared at 1000 °C are shown in FIG. 4, where two families of glass-ceramic systems (Samples A-B, and Samples C-E, respectively) can be identified, as reflected in the dilatometric measurements. As shown in FIG. 4, the glass ceramics obtained from Sanbornite-field compositions (Samples A-B) have higher thermal expansions than the Celsian-field glass ceramics (Samples C-E), due to the differences in the CTEs of these phases (13.5·10⁻⁶ °C⁻¹ and 8.0·10⁻⁶ °C⁻¹, respectively). FIG. 4 also shows a target dilatometric curve with a CTE of 11.75 ·10⁻⁶ °C⁻¹, underscoring that the thermal expansion of the glass-ceramics that can be obtained from the Sanbornite-field compositions are relatively close to the target CTE.

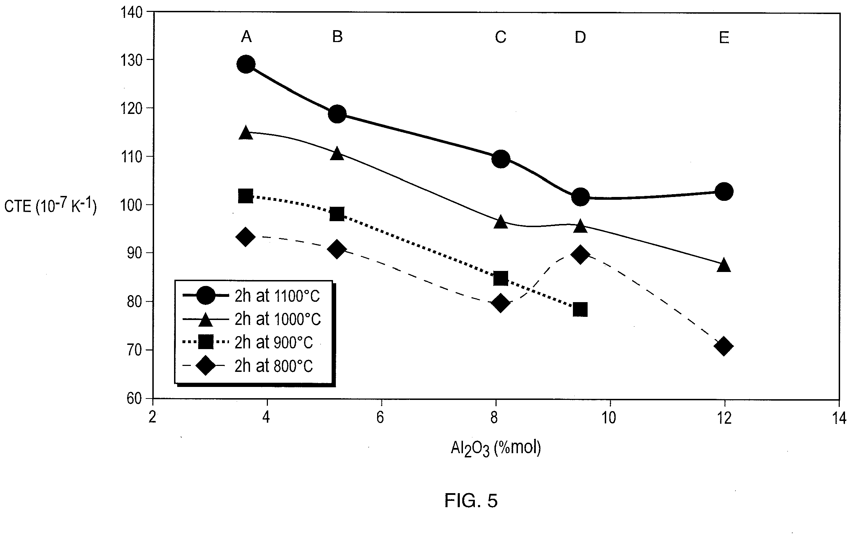

FIG. 5 shows the CTE, calculated between 30 °C and 850 °C for different glass-ceramics prepared by 2 hour isotherms between 800 °C and 1100 °C. For Samples C-E prepared at 800 °C, the CTE has been calculated between 25 °C and 300 °C, because of the softening of residual glass at about 800°C for these samples.

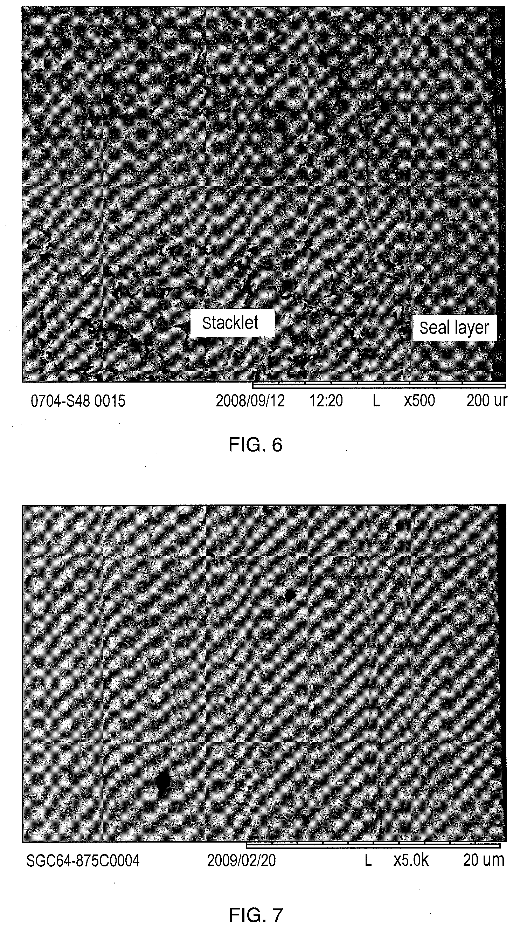

From the DSC and CTE measurements shown in FIGS. 2-5, Samples B-C seemed to be the most desirable glass systems for the sealing application, because Sample C has the largest Δ(Tₓ-T_{g}) of 249 °C at a heating rate of about 20 °C/min, and therefore is likely to have good sintering properties, and Sample B has a CTE that approximately matches the target CTE and a reasonably high Δ(Tₓ-T_{g}) of 201 °C at the same heating rate of about 20 °C/min. FIG. 6 shows a stack-seal interface the seal thickness of about 50 microns, the seal having the glass-ceramic composition of Sample C. FIG. 7 shows a seal material microstructure, showing an average crystal size of about 2 microns, the seal having the glass-ceramic composition of Sample B.

## Claims

1. A solid oxide ceramic, comprising:
a) a substrate defining a surface, the substrate including at least one material selected from the group consisting of yttria-stabilized zirconia (YSZ), lanthanum strontium titanate (LST), lanthanum strontium manganite (LSM), and nickel oxide-YSZ composite; and
b) a seal coating at least a portion of the surface, the seal including a glass composition including a sanbornite (BaO•2SiO₂) crystal phase, a hexacelsian (BaO•Al₂O₃•2SiO₂) crystal phase, and residual glass phase,
**characterized in that**
the seal has a coefficient of thermal expansion equal to or less than that of the substrate at said surface,
wherein the glass composition includes crystals having an average particle size (d₅₀) in a range of between 200 nm and 50 µm,
wherein the glass composition comprises between 42 vol% and 80 vol% of the sanbornite crystal phase, and
wherein the seal has a thickness in a range of between 1 µm and 500 µm at room temperature.

2. The solid oxide ceramic of Claim 1, wherein the glass composition has a difference between a glass crystallization temperature and a glass transition temperature in a range of between 200 °C and 400 °C at a heating rate of 20 °C/min.

3. The solid oxide ceramic of Claim 1, wherein the molar ratio of SiO₂:BaO in the glass composition is between 1:1 and 4:1.

4. The solid oxide ceramic of Claim 3, wherein the amount of Al₂O₃ present in the glass composition is in a range of between 3.5 mol% and 12 mol%, and wherein the molar ratio of SiO₂:BaO is in a range of between 1:1 and 4:1.

5. A method of sealing at least a part of a surface of a solid oxide ceramic comprising the steps of:
a) forming a glass composition that upon heating will form a Sanbornite (BaO•2SiO₂) crystal phase, a Hexacelsian (BaO•Al₂O₃•2SiO₂) crystal phase, and a residual glass phase, wherein the glass composition comprises between 42 vol% and 80 vol% of the sanbornite crystal phase;
b) milling the glass composition to produce a glass powder having an average particle size (d₅₀) in a range of between 500 nm and 100 µm;
c) mixing the glass powder with a binder and a liquid to form a slurry;
d) coating at least a part of a substrate with the slurry, the substrate including at least one material selected from the group consisting of yttria stabilized zirconia (YSZ), lanthanum strontium titanate (LST), lanthanum strontium manganite (LSM), and nickel oxide-YSZ composite;
e) sintering the coating of the coated solid oxide ceramic part; and
f) heating the coating of the solid oxide ceramic part to form crystals having an average particle size (d₅₀) in a range of between 200 nm and 50 µm, thereby forming the sealed solid oxide ceramic part, wherein the seal has a coefficient of thermal expansion equal to or less than that of the substrate at said surface, wherein the coating of the solid oxide ceramic part after heating has a thickness in a range of between 1 µm and 500 µm at room temperature.

6. The method of Claim 5, wherein the glass composition has a difference between a glass crystallization temperature and a glass transition temperature in a range of between 200 °C and 400 °C at a heating rate of 20 °C/min.

7. The method of Claim 5, wherein sintering the coated solid oxide ceramic part is conducted at a pressure of less than 3 MPa.

8. The method of Claim 5, wherein heating the coating of the solid oxide ceramic part to form crystals is conducted at a pressure of less than 3 MPa.

9. The method of Claim 5, further including removing the binder before sintering the coated solid oxide ceramic part by heating the coated solid oxide ceramic part to a temperature in a range of between 300 °C and 500 °C for a time period in a range of between one hour and 24 hours.

10. The method of Claim 5, wherein the molar ratio of SiO₂:BaO is between 1:1 and 4:1.

11. The method of Claim 5, wherein the amount of Al₂O₃ present is in a range of between 3.5 mol% and 12 mol%, and wherein the molar ratio of SiO₂:BaO is in a range of between 1:1 and 4:1.

12. The method of Claim 5, wherein the coated solid oxide ceramic part is sintered at a temperature in a range of between 750 °C and 950 °C for a time period in a range of between one-half hour and 8 hours.

13. The method of Claim 5, wherein heating the coating of the solid oxide ceramic part to form crystals is conducted at a temperature in a range of between 850 °C and 1100 °C for a time period in a range of between one-half hour and 8 hours.

## Patentansprüche

1. Eine Festoxidkeramik, umfassend:
a) ein Substrat, das eine Oberfläche definiert, wobei das Substrat mindestens ein Material beinhaltet, das aus der folgenden Gruppe ausgewählt ist: Yttriumdioxidstabilisiertem Zirkoniumdioxid (YSZ), Lanthanstrontiumtitanat (LST), Lanthanstrontiummanganit (LSM) und Nickeloxid-YSZ-Verbundwerkstoff; und
b) eine Dichtungsbeschichtung, die mindestens einen Teil der Oberfläche beschichtet, wobei die Dichtung eine Glaszusammensetzung beinhaltet, die eine Sanbornit-(BaO•2 SiO₂)-Kristallphase, eine Hexaceisian-(BaO•Al₂O₃•2 SiO₂)-Kristallphase und eine Restglasphase beinhaltet,
**dadurch gekennzeichnet, dass**
die Dichtung einen Wärmeausdehnungskoeffizienten aufweist, der gleich oder kleiner als der des Substrats an der Oberfläche ist,
wobei die Glaszusammensetzung Kristalle mit einer durchschnittlichen Partikelgröße (d₅₀) in einem Bereich zwischen 200 nm und 50 µm beinhaltet,
wobei die Glaszusammensetzung zwischen 42 Vol.-% und 80 Vol.-% der Sanbornit-Kristallphase umfasst, und
wobei die Dichtung eine Dicke in einem Bereich zwischen 1 µm und 500 µm bei Raumtemperatur aufweist.

2. Festoxidkeramik nach Anspruch 1, worin die Glaszusammensetzung eine Differenz zwischen einer Glaskristallisationstemperatur und einer Glasübergangstemperatur in einem Bereich zwischen 200 °C und 400 °C bei einer Aufheizrate von 20 °C/min aufweist.

3. Festoxidkeramik nach Anspruch 1, wobei das Molverhältnis von SiO₂:BaO in der Glaszusammensetzung zwischen 1:1 und 4:1 liegt.

4. Festoxidkeramik nach Anspruch 3, wobei die in der Glaszusammensetzung vorhandene Menge an Al₂O₃ in einem Bereich zwischen 3,5 Mol-% und 12 Mol-% liegt und wobei das Molverhältnis von SiO₂:BaO in einem Bereich zwischen 1:1 und 4:1 liegt.

5. Verfahren zum Abdichten mindestens eines Teils einer Oberfläche aus einer Festoxidkeramik, das folgende Schritte umfasst:
a) Bilden einer Glaszusammensetzung, die beim Erwärmen eine Sanbornit-Kristallphase (BaO•2SiO₂), eine Hexacelsian-Kristallphase (BaO•Al₂O₃•2 SiO₂) und eine Restglasphase bildet,
wobei die Glaszusammensetzung zwischen 42 Vol-% und 80 Vol-% der Sanbornit-Kristallphase umfasst;
b) Mahlen der Glaszusammensetzung, um ein Glaspulver mit einer durchschnittlichen Partikelgröße (d₅₀) in einem Bereich zwischen 500 nm und 100 µm herzustellen;
c) Mischen des Glaspulvers mit einem Bindemittel und einer Flüssigkeit zu einer Aufschlämmung;
d) Beschichten mindestens eines Teils eines Substrats mit der Aufschlämmung, wobei das Substrat mindestens ein Material beinhaltet, ausgewählt aus der Gruppe bestehend aus Yttriumoxid-stabilisiertem Zirkoniumdioxid (YSZ), Lanthanstrontiumtitanat (LST), Lanthanstrontiummanganit (LSM) und Nickeloxid-YSZ-Verbundwerkstoff;
e) Sintern der Beschichtung des beschichteten festen Oxidkeramikteils; und
f) Erwärmen der Beschichtung des Festoxidkeramikteils, um Kristalle mit einer durchschnittlichen Partikelgröße (d₅₀) in einem Bereich zwischen 200 nm und 50 µm zu bilden, wodurch das abgedichtete Festoxidkeramikteil gebildet wird, wobei die Dichtung einen Wärmeausdehnungskoeffizienten aufweist, der gleich oder kleiner als der des Substrats an der Oberfläche ist, wobei die Beschichtung des Festoxidkeramikteils nach dem Erwärmen eine Dicke in einem Bereich zwischen 1 µm und 500 µm bei Raumtemperatur aufweist.

6. Verfahren nach Anspruch 5, worin die Glaszusammensetzung einen Unterschied zwischen einer Glaskristallisationstemperatur und einer Glasübergangstemperatur in einem Bereich zwischen 200 °C und 400 °C bei einer Erwärmungsrate von 20 °C/min aufweist.

7. Verfahren nach Anspruch 5, worin das Sintern des beschichteten Festoxidkeramikteils bei einem Druck von weniger als 3 MPa durchgeführt wird.

8. Verfahren nach Anspruch 5, wobei das Erwärmen der Beschichtung des Festoxidkeramikteils zum Bilden von Kristallen bei einem Druck von weniger als 3 MPa durchgeführt wird.

9. Verfahren nach Anspruch 5, ferner umfassend das Entfernen des Bindemittels vor dem Sintern des beschichteten Festoxidkeramikteils durch Erwärmen des beschichteten Festoxidkeramikteils auf eine Temperatur in einem Bereich zwischen 300 °C und 500 °C für einen Zeitraum in einem Bereich zwischen einer Stunde und 24 Stunden.

10. Verfahren nach Anspruch 5, wobei das Molverhältnis von SiO₂:BaO zwischen 1:1 und 4:1 liegt.

11. Verfahren nach Anspruch 5, worin die Menge an vorhandenem Al₂O₃ in einem Bereich zwischen 3,5 Mol-% und 12 Mol-% liegt, und wobei das Molverhältnis von SiO₂:BaO in einem Bereich zwischen 1:1 und 4:1 liegt.

12. Verfahren nach Anspruch 5, wobei das beschichtete Festoxidkeramikteil bei einer Temperatur in einem Bereich zwischen 750 °C und 950 °C für einen Zeitraum in einem Bereich zwischen einer halben Stunde und acht (8) Stunden gesintert wird.

13. Verfahren nach Anspruch 5, wobei das Erwärmen der Beschichtung des Festoxidkeramikteils zum Bilden von Kristallen bei einer Temperatur in einem Bereich zwischen 850 °C und 1100 °C für einen Zeitraum in einem Bereich zwischen einer halben Stunde und acht (8) Stunden durchgeführt wird.

## Revendications

1. Céramique à base d'oxyde solide, comprenant :
a) un substrat définissant une surface, le substrat comportant au moins un matériau choisi dans le groupe constitué de zircone stabilisée à l'oxyde d'yttrium (YSZ), de titanate de lanthane et de strontium (LST), de manganite de lanthane et de strontium (LSM) et de composite oxyde de nickel-YSZ ; et
b) un joint d'étanchéité recouvrant au moins une partie de la surface, le joint d'étanchéité comportant une composition de verre comportant une phase cristalline de sanbornite (BaO•2SiO₂), une phase cristalline d'hexacelsian (BaO•Al₂O₃•2SiO₂) et une phase de verre résiduelle,
**caractérisée en ce que**
le joint d'étanchéité présente un coefficient de dilatation thermique inférieur ou égal à celui du substrat sur ladite surface,
la composition de verre comportant des cristaux présentant une taille de particule moyenne (d₅₀) dans une plage comprise entre 200 nm et 50 µm,
la composition de verre comprenant entre 42 % en volume et 80 % en volume de la phase cristalline de sanbornite, et
le joint d'étanchéité présentant une épaisseur dans une plage comprise entre 1 µm et 500 µm à la température ambiante.

2. Céramique à base d'oxyde solide selon la revendication 1, dans laquelle la composition de verre présente une différence entre une température de cristallisation du verre et une température de transition vitreuse dans une plage comprise entre 200 °C et 400 °C à une vitesse de chauffage de 20 °C/min.

3. Céramique à base d'oxyde solide selon la revendication 1, dans laquelle le rapport molaire de SiO₂:BaO dans la composition de verre est compris entre 1:1 et 4:1.

4. Céramique à base d'oxyde solide selon la revendication 3, dans laquelle la quantité de Al₂O₃ présente dans la composition de verre se situe dans une plage comprise entre 3,5 % en moles et 12 % en moles, et dans laquelle le rapport molaire de SiO₂:BaO se situe dans une plage comprise entre 1:1 et 4:1.

5. Procédé pour sceller au moins une partie d'une surface d'une céramique à base d'oxyde solide comprenant les étapes de :
a) formation d'une composition de verre qui, par chauffage, formera une phase cristalline de sanbornite (BaO•2SiO₂), une phase cristalline d'hexacelsian (BaO•Al₂O₃•2SiO₂) et une phase de verre résiduelle, la composition de verre comprenant entre 42 % en volume et 80 % en volume de la phase cristalline de sanbornite ;
b) broyage de la composition de verre pour produire une poudre de verre présentant une taille de particule moyenne (d₅₀) dans une plage comprise entre 500 nm et 100 µm ;
c) mélange de la poudre de verre avec un liant et un liquide pour former une suspension ;
d) revêtement d'au moins une partie d'un substrat avec la suspension, le substrat comportant au moins un matériau choisi dans le groupe constitué de zircone stabilisée à l'oxyde d'yttrium (YSZ), de titanate de lanthane et de strontium (LST), de manganite de lanthane et de strontium (LSM) et de composite oxyde de nickel-YSZ;
e) frittage du revêtement de la pièce en céramique à base d'oxyde solide revêtue ; et
f) chauffage du revêtement de la pièce en céramique à base d'oxyde solide pour former des cristaux présentant une taille de particule moyenne (d₅₀) dans une plage comprise entre 200 nm et 50 µm, formant ainsi la pièce en céramique à base d'oxyde solide scellée, le joint d'étanchéité présentant un coefficient de dilatation thermique inférieur ou égal à celui du substrat au niveau de ladite surface, le revêtement de la pièce en céramique à base d'oxyde solide après le chauffage présentant une épaisseur dans une plage comprise entre 1 µm et 500 µm à la température ambiante.

6. Procédé selon la revendication 5, dans lequel la composition de verre présente une différence entre une température de cristallisation du verre et une température de transition vitreuse dans une plage comprise entre 200 °C et 400 °C à une vitesse de chauffage de 20 °C/min.

7. Procédé selon la revendication 5, dans lequel le frittage de la pièce en céramique à base d'oxyde solide revêtue est effectué à une pression inférieure à 3 MPa.

8. Procédé selon la revendication 5, dans lequel le chauffage du revêtement de la pièce en céramique à base d'oxyde solide pour former des cristaux est effectué à une pression inférieure à 3 MPa.

9. Procédé selon la revendication 5, comportant en outre l'élimination du liant avant le frittage de la pièce en céramique à base d'oxyde solide revêtue en chauffant la pièce en céramique à base d'oxyde solide revêtue à une température dans une plage comprise entre 300 °C et 500 °C pendant une période de temps dans une plage comprise entre une heure et 24 heures.

10. Procédé selon la revendication 5, dans lequel le rapport molaire de SiO₂:BaO est compris entre 1:1 et 4:1.

11. Procédé selon la revendication 5, dans lequel la quantité de Al₂O₃ présente se situe dans une plage comprise entre 3,5 % en moles et 12 % en moles et le rapport molaire de SiO₂:BaO se situe dans une plage comprise entre 1:1 et 4:1.

12. Procédé selon la revendication 5, dans lequel la pièce en céramique à base d'oxyde solide revêtue est frittée à une température dans une plage comprise entre 750 °C et 950 °C pendant une période de temps dans une plage comprise entre une demi-heure et 8 heures.

13. Procédé selon la revendication 5, dans lequel le chauffage du revêtement de la pièce en céramique à base d'oxyde solide pour former des cristaux est effectué à une température dans une plage comprise entre 850 °C et 1 100 °C pendant une période de temps dans une plage comprise entre une demi-heure et 8 heures.
